# EUROPEAN PATENT APPLICATION

(11) **EP 0 834 727 A1**
(43) Date of publication of application: **08.04.1998**
(21) Application number: 97117188.9
(22) Date of filing: 03.10.1997
(51) Int. Cl.: G01K 1/00, G01K 1/14

(54) **Device for mounting the sensor element of a temperature measuring instrument in thermal contact with pipes and use of such device**

(30) Priority: 03.10.1996 DK 108696
(71) Applicant: Gemina Termix Productions A/S, 7451 Sunds (DK)
(72) Inventor: Mikkelsen, Erik, 7600 Struer (DK)
(74) Representative: Nielsen, Leif

(57) **Abstract**

The invention relates to a device for mounting the sensor element of a temperature measuring instrument onto a pipe in a heating or refrigerating installation or in an industrial or processing plant, wherein a temperature of a pipe is used as an indicator of a temperature of a medium inside the pipe. The device consists of a clip comprising a head, a first leg, a second leg and a socket. The first leg and the second leg are designed to extend on either side of the tube. The socket is designed to extend from the head to an outer side of the pipe. A sensor element will be kept in thermal contact with the outer side of the pipe by the socket. The socket constitutes either an integral part of the clip or a separate element. The invention is advantageous in that with the clip according to the invention it is possible to retain the sensor element in thermal contact with the pipe without having to perform a treatment of the pipe and without any risk of leakage or corrosion of the pipe.

## Description

The present invention relates to a device for mounting a sensor element of a temperature measuring instrument in thermal contact with the outer side of a pipe.

In connection with the mounting of temperature measuring instruments with sensor elements on pipes in central or district heating installations or in refrigerating units it is often difficult to mount sensors in such a manner that corrosion and leakages are avoided, that interference with a flow of a medium, such as a heating or cooling medium, is avoided, and that a treatment of the pipes is avoided.

Known temperature sensors consist of a sensor element, which is mounted to the pipes by boring through the pipes so that the sensor element may be introduced into the flow of heating or cooling medium in the pipe. As mentioned, this means that a treatment of the pipes must he performed, that the flow of heating or cooling medium is interfered with, and that the risk of corrosion and leakages in the pipes is increased.

Standard temperature sensors are also known, which consist of a circular cylindrical indicator house with a concentric cylindrical sensor element. The sensor element has a plane side facing away from the indicator element, in which an adjustment screw is arranged, which is used for calibrating the thermometer. Such a standard temperature sensor is difficult to use in combination with round pipes. Indeed, especially adapted temperature sensors are known, wherein the end surface of the cylindrical sensor element has a curvature corresponding to the curvature of the pipe. Thus, such temperature sensors must be adapted especially to each individual diameter. Furthermore, mounting such temperature sensors is difficult.

GB 1 591 038 describes a device for a temperature measuring instrument. The holder comprises a temperature sensitive element mounted on a thermal conductor in the form of a bolt extending through a bore in the device. The bolt is provided with nuts, by means of which the temperature sensitive element is fastened to the bolt. The bolt has an end that is in contact with a pipe and through which end the temperature of the pipe is transmitted to the bolt and remitted to the temperature sensitive element fastened to the bolt.

This device has the important drawback that the contact surface between the end of the bolt and the pipe the temperature of which is to be measured is very small. This is by purpose so, however, since retention of the end of the bolt in contact with the pipe is the best possible if the contact surface is as small as possible. However, the heat transmission from the outer side of the pipe to the end of the bolt, through the bolt and to the temperature sensitive element is very poor and very slow.

It is the object of the present invention to provide a device that makes it possible to mount one or more temperature measuring instruments, particularly in a standard design, to a pipe in such a manner that the drawbacks discussed above are avoided and in such a manner that a rapid and secure measurement of the temperature of an outer side of a pipe is obtained.

This object is achieved by a device that is characterised in that the thermal conductor is a socket (10), that the socket has a first end mounted in the head (1, 30) of the clip, that the socket (10) has a second end (12) designed to be in contact with the outer side (21) of the pipe (20), and that said second end extends in a curve, which in a situation of use seen perpendicularly to a cross-section of the pipe (20) has a shape of a path of a circle having a radius r.

A device in the form of a clip with the above-mentioned characteristics makes it possible to mount and fasten a temperature sensor to a pipe in an entirely new and fundamentally different way. The device in the form of a clip means that no treatment of the pipe must be performed. The sensor element of the temperature measuring device is in good thermal contact with the socket, which is in contact with an outer surface of the pipe. The contact between the socket and the outer side of the pipe has a large surface in order to ensure rapid heat transmission from the outer side of the pipe to the socket and on to the sensor element of the temperature measuring device. Furthermore, the sensor element is not mounted in the flow of a medium in the pipe such as a heating or cooling medium. Thus, this means that the flow of heating or cooling medium will not be disturbed while the risk of corrosion and leakages is eliminated. The invention may also be used for other media in pipes than heating and cooling media, e.g. media in industrial or processing plants, where the temperature of the medium may be determined by measuring the temperature of the pipe in which the medium flows.

Using a thermal conductor that is in contact with the sensor element, it will be possible to use a sensor element with a standard design and simultaneously obtain good thermal contact with the pipe by means of the thermal conductor. The thermal conductor may, such as appears below, be designed simply in such a manner that it is adaptable to different pipe diameters.

The head and the legs of the clip are preferably produced from a heat-resisting plastic. The head and the legs may also all or individually be produced from other materials such as a metal or a ceramic material. The thermal conductor is preferably provided in the form of a socket having a cylindrical hollow, which has an entirely or partially inwardly oriented cylinder surface intended for contact with the sensor element, and which further has a cylinder segment surface having a radius corresponding to the radius of the pipe on which the device is mounted. Such a socket is preferably produced from a material with good thermal conductivity such as aluminium or zinc. The socket may also be produced from a different metal such as stainless steel or copper or other materials such as a plastic or a ceramic material.

In a second embodiment the clip is provided with a brace intended to extend from an outer side of the first leg to an outer side of the second leg after the clip has been mounted to the pipe. The brace is designed to retain an inner side of the legs in contact with an outer side of the pipe and in engagement around the pipe by squeezing the legs towards each other so that the legs are held at the smallest possible distance from each other, the pipe extending between the legs. The use of a brace permits the retention of the clip on a pipe. Thus, retention will occur even if the legs have limited elasticity or have an elasticity that decreases over time, e.g. as a result of shrinking in plastic due to the influence of heat.

In a third embodiment the clip is provided with a second brace that comprises flanges intended to contact other flanges on the head. The brace is designed to retain the head with the legs around an outer side of the pipe. The use of a second brace also permits a retention of the clip on a pipe. Thus, the retention will occur even if the legs have limited elasticity or have an elasticity that decreases over time, e.g. as a result of shrinking in plastic due to the influence of heat.

The invention will now be described in further detail with reference to the accompanying drawing, wherein
- Fig. 1A: is a cross-section view in a first direction through an embodiment of a head with legs forming part of the device according to the invention,
- Fig. 1B: is a plan view in a second direction, perpendicular to the first direction, of the embodiment of the head with legs,
- Fig. 2A: is a cross-section view in a first direction through a first embodiment of a socket retained in the clip,
- Fig. 2B: is a plan view in a second direction, perpendicular to the first direction, of the first embodiment of the socket,
- Fig. 3A: is a cross-section view in a first direction through a second embodiment of a socket that constitutes part of the clip according to the invention,
- Fig. 3B: is a plan view in a second direction, perpendicular to the first direction, of the second embodiment of the socket,
- Fig. 4: is a cross-section view through the clip comprising the first embodiment of the socket and mounted on a pipeline having a first diameter,
- Fig. 5: is a cross-section view through the clip comprising the second embodiment of the socket and mounted on a pipeline having a second diameter,
- Fig. 6: is a cross-section view through a brace for use in combination with a clip,
- Fig. 7: is a cross-section view through an alternative embodiment of a clip on which the brace shown in Fig. 6 is mounted,
- Fig. 8A: is a cross-section view in a first direction through an embodiment of a head with flanges, which constitutes a part of the device according to the invention, and
- Fig. 8B: is a plan view in a second direction, perpendicular to the first direction, of the embodiment of the head with flanges.

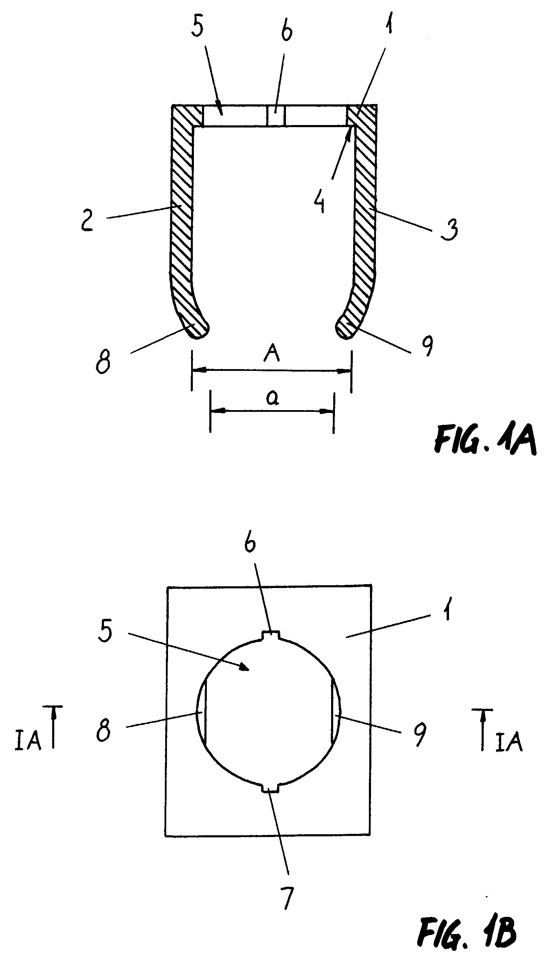

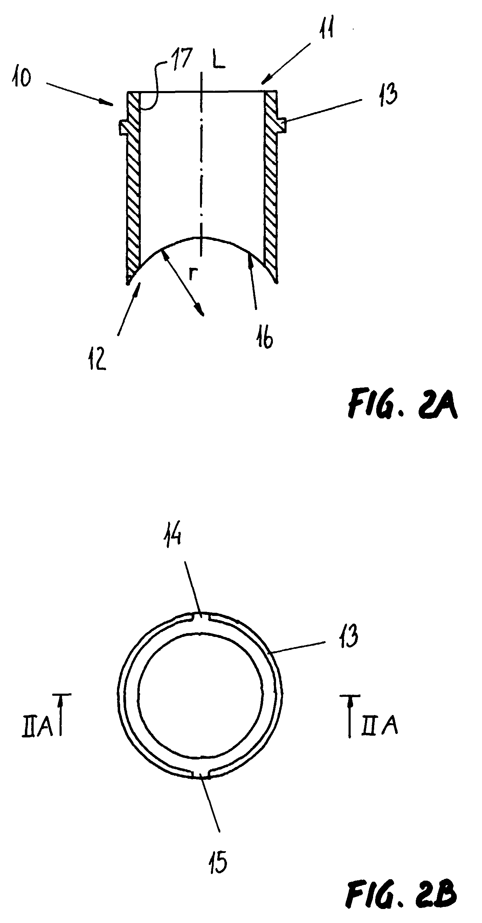

Fig. 1A and Fig. 1B show a cross-section view, respectively a plan view, of a part of the clip according to the invention. The figures show an embodiment of a head 1 and a first leg 2 and a second leg 3, which extend from an underside 4 of the head substantially perpendicularly to the head. The head is provided with a hole 5, which is intended to receive a first end of a socket (see Fig. 2A and Fig. 2B). The hole 5 is provided with grooves 6, 7, which are intended to receive projecting tongues 14, 15 (see Fig. 2A and Fig. 2B) on a socket 10. In this manner it is ensured that the socket 10 is always mounted in a correct angular position relative to the clip and, therefore, relative to a pipeline.

The first leg 2 and the second leg 3 form a U-shaped cross-section together with the head 1. A pipe (not shown) is intended to extend between the legs 2, 3. The legs 2, 3 are bent inward towards each other in extreme ends 8, 9 so that a distance a between the extreme ends 8, 9 of the legs 2, 3 is shorter than a distance A between the part of the legs 2, 3 that extends between the head 1 and the extreme ends 8, 9.

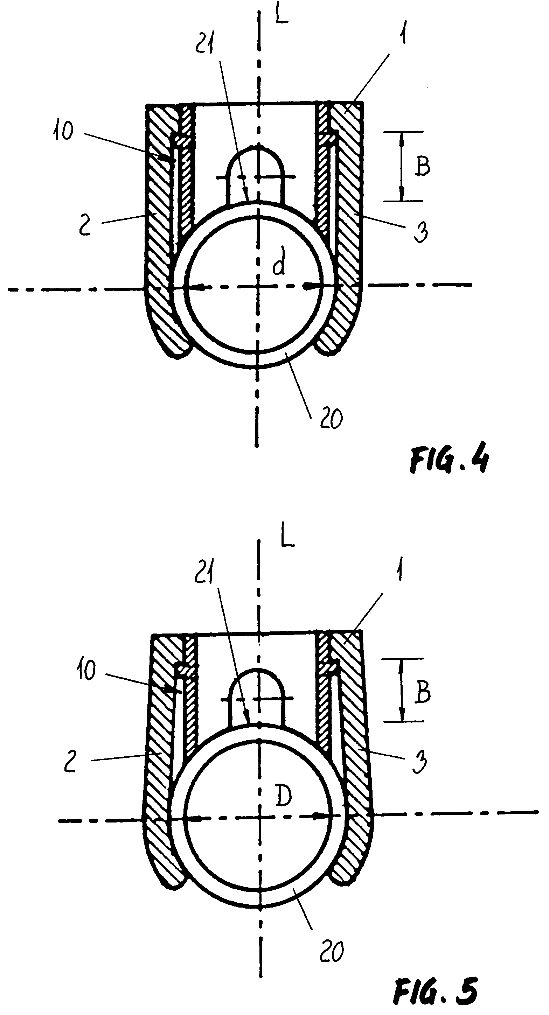

Fig. 2A and Fig. 2B show a cross-section through, respectively a plan view of, a part of the clip according to the invention. The figures show a first embodiment of the socket 10. The socket 10 of the embodiment shown is a circular cylinder shell and comprises a first end 11, which is designed to extend through the hole 5 in the head 1 (see Fig. 1A and Fig. 1B), and a second end 12 intended to contact an outer side of the pipe (see Fig. 4 and Fig. 5), which is designed to extend between the legs 2, 3 (see Fig. 1A and Fig. 1B). The first end 11 and the second end 12 are divided by a collar 13. The first end is provided with tongues 14, 15, which are designed to extend into the grooves 6, 7 in the hole 5 (see Fig. 1A and Fig. 1B).

The second end 12 of the socket 10 extends in a curve 16 having the shape of a circular path of a curve. The circular path of a curve has a radius r that corresponds to the radius of the pipe (not shown). The collar 13 is intended to contact the underside 4 of the head 1 and to retain the socket 10 in such a manner that a distance B from the underside 4 of the head 1 to the outer side of the pipe (see Fig. 4 and Fig. 5) will be maintained during mounting of the clip according to the invention onto the pipe.

The first embodiment of the socket 10 is intended to receive a circular cylindrical sensor element (not shown), which is intended to extend inside the socket 10 from the head 1 in a direction parallel to a longitudinal axis L of the socket 10 and which is in contact with an inner side 17 of the socket 10.

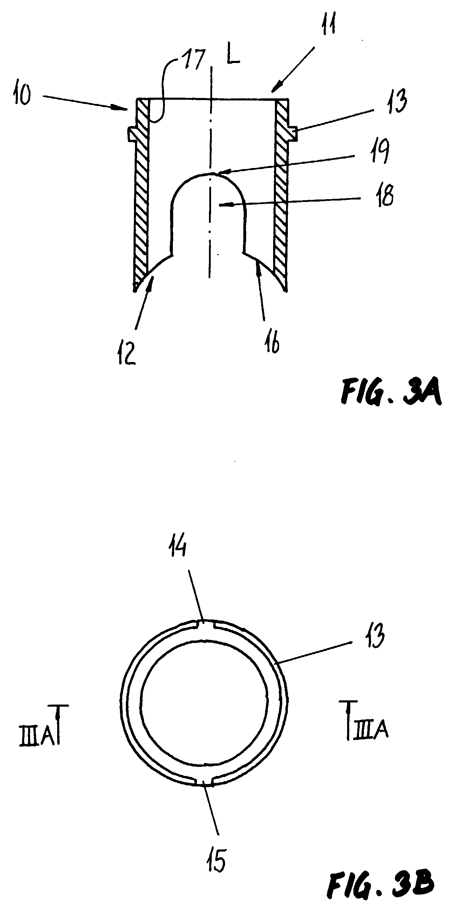

Fig. 3A and Fig. 3B show a section view through, respectively a plan view of, a part of the clip according to the invention. The figures show a second embodiment of a socket 10. The socket 10 of the embodiment shown is circular cylindrical and comprises a first end 11, which is intended to extend through the hole 5 in the head 1 (see Fig. 1A and Fig. 1B), and a second end 12 intended to contact an outer side of a pipe (see Fig. 4 and Fig. 5), which is intended to extend between the tongues 2, 3 (see Fig. 1A and Fig. 1B). The first end 11 and the second end 12 are divided by a collar 13. The first end is provided with tongues 14, 15 intended to project into the grooves 6, 7 in the hole 5.

The second end 12 of the socket 10 extends in a curve 16 having the shape of a circular path of a curve. The circular path of a curve has a radius r that corresponds to the radius of the pipe (not shown). The collar 13 is designed to contact an underside 4 of the head 1 and to retain the socket in such a manner that a distance B from the underside 4 of the head 1 to the outer side of the pipe (see Fig. 4 and Fig. 5) is maintained during mounting of the clip according to the invention onto the pipe. The second end 12 of the socket is provided with a recess 18 extending from the second end 12 along the longitudinal axis L towards the first end 11. The recess 18 has a bottom 19, which faces the first end 11 of the socket 10.

The second embodiment of the socket is intended to receive a circular cylindrical sensor element (not shown), which is intended to extend in the recess 18 in a direction perpendicular to the longitudinal axis L of the socket 10 and which is in contact with the bottom 19 of the recess 18. However, the second embodiment of the socket 10 may also be used for receiving a sensor element such as the one mentioned in the description of Fig. 2A and Fig. 2B.

The first embodiment ad the second embodiment of a socket have both been illustrated as manufactured from a hollow tubular element. However, the socket may also be manufactured from a solid rod-shaped element in which the necessary recesses, e.g. for receiving a sensor element, have been performed by boring or similar treatment.

Fig. 4 shows a clip according to the invention mounted on a pipe 20 with a first diameter d. The clip comprises a socket 10 like the one shown in Fig. 3A and Fig. 3B. The clip is mounted around the pipe 20 in such a manner that the second end 12 of the socket 10 is in contact with an outer side 21 of the pipe 20 and such that the extreme ends 8, 9 of the legs 2, 3 extend on a side of the diameter d opposite to the head.

Fig. 5 shows a clip according to the invention mounted on a pipe 20 with a second diameter D, which is slightly larger than the first diameter d (see Fig. 4). The clip comprises a socket 10 like the one shown in Fig. 3A and Fig. 3B. The clip is mounted around the pipe 20 in such a manner that the second end 12 of the socket 10 is in contact with an outer side 21 of the pipe 20 and such that the extreme ends 8, 9 of the legs 2, 3 extend on a side of the diameter D opposite the head 1.

Fig. 4 and Fig. 5 illustrate that a clip according to the invention, which has been produced with fixed measures, will despite this fact be applicable for pipes 20 having different diameters d, respectively D.

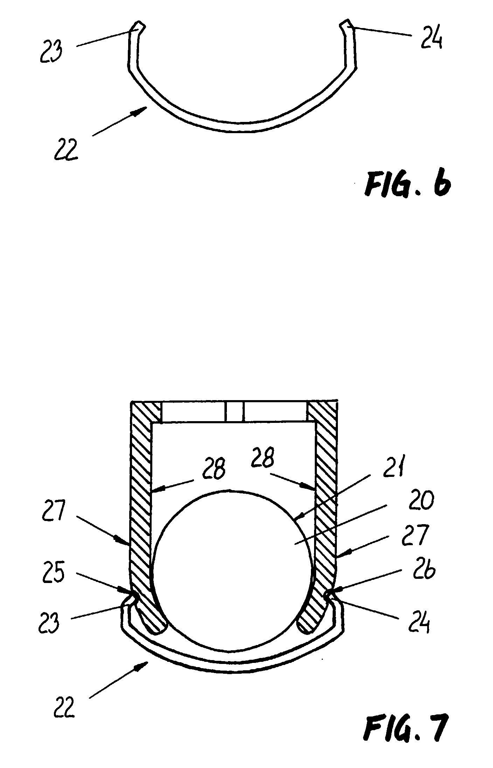

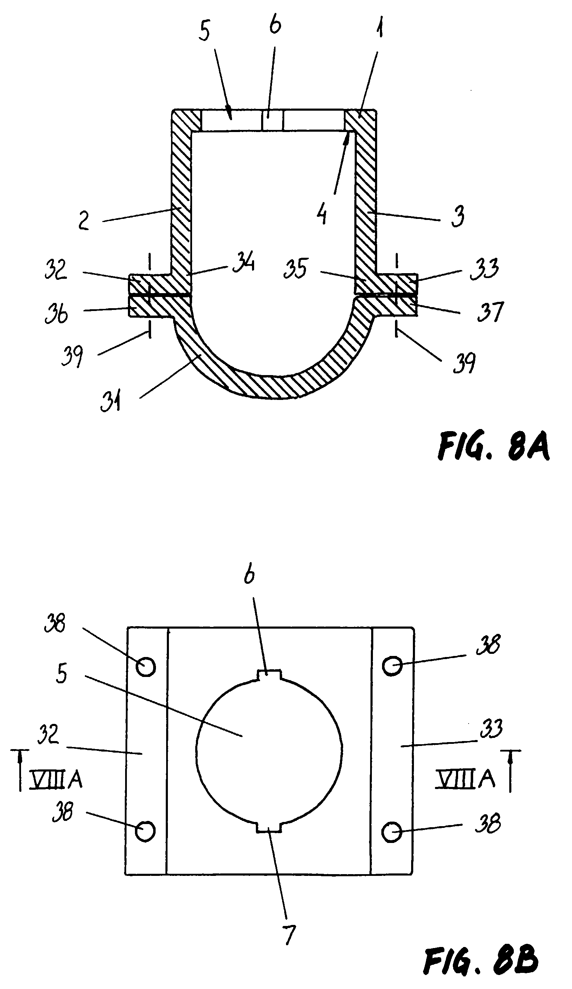

Fig. 6 shows a cross-section of a brace 22 according to the invention for use in combination with the clip according to the invention. The brace 22 consists of a resilient element provided with a first flap 23 and a second flap 24. The first flap 23 and the second flap 24 are intended to enter into engagement with tracks (see Fig. 7) that are provided in an alternative embodiment of a clip according to the invention.

Fig. 7 shows the alternative embodiment of a clip according to the invention mounted on a pipe 20 having a first diameter d and being provided with the brace 22 according to the invention. The first leg 2 and the second leg 3 are provided with tracks 25, 26, which extend along an outer side 26 of the legs 2, 3. The first flap 23 and the second flap 24 on the brace 22 extend inwardly in the tracks 25, 26 on the outer surface 27 of the legs 2, 3 and retain the legs 2, 3 in a distance from each other so that an inner side 28 of the legs 2, 3 is constantly in contact with an outer surface 21 of the pipe 20.

Fig. 8A and Fig. 8B show a cross-section view through, respectively a plan view, of a second embodiment of a part of the clip according to the invention. The figures show an embodiment of a head 30 and brace 31. The head 30 is provided with legs 2, 3 and a first flange 32 and a second flange 33, which extend from an underside 4 of the head substantially perpendicularly to the head. The head is provided with a hole 5 intended to receive a first end of a socket (see Fig. 2A and Fig. 2B). The hole 5 is provided with grooves 6, 7 intended to receive projecting tongues 14, 15 (see Fig. 2A and Fig. 2B) on a socket 10. In this manner it is ensured that the socket 10 is always mounted in a correct angular position relative to the clip and, thus, relative to a pipeline.

The first leg 2 and the second leg 3 together with the head 30 form a U-shaped cross-section. A pipe (not shown) is intended to extend between the legs 2, 3. The flanges 32, 33 are formed by the legs 2, 3 being bent outward away from each other in extreme ends 34, 35. Likewise, the brace 31 is provided with flanges 36, 37, which extend outward from the brace 31. The flanges 32, 33, 36, 37 are provided with holes 38 through which fastening means 39 such as screws, bolts and the like extend so that the head 30 with the legs 2, 3 and the brace 31 may be held against each other around the pipe (not shown). The number of holes 38 in the flanges 32, 33, 36, 37 may differ. It is also possible to hold the head 30 and the brace 31 against each other by means other than flanges 32, 33, 36, 37 and fastening means 39 extending through holes 36.

The invention has been described above with reference to specific embodiments of clip and brace. However, the invention may be provided in other embodiments, which are all within the idea of the invention. Thus, instead of a socket it will be possible to use thermal conductor paste as thermal conductor. It will also be possible to combine a socket with thermal conductor paste in such a manner that the socket in combination with the paste constitutes the thermal conductor, or in such a manner that the paste constitutes the thermal conductor.

## Claims

1. A device for mounting a sensor element of a temperature measuring instrument in thermal contact with the outer side (21) of a pipe (20) having an outer radius r, said device consisting of a clip having a U-shaped cross-section, said clip comprising a head (1, 30) having an underside (4), wherein a first leg (2) and a second leg (3) extend from the underside (4) of the head (1) substantially in parallel with each other at a mutual distance substantially equal to a diameter of the pipe, wherein a thermal conductor extends within the U-shaped cross-section, said thermal conductor being intended for contact with the sensor element and with the pipe (20), **characterised** in that the thermal conductor is a socket (10), that the socket has a first end mounted in the head (1, 30) of the clip, that the socket (10) has a second end (12) designed to be in contact with the outer side (21) of the pipe (20), and that said second end extends in a curve, which in a situation of use seen perpendicularly to a cross-section of the pipe (20) has a shape of a path of a curve having a radius r.

2. A device according to claim 1, **characterised** in that the socket constitutes a separate element of the clip, that the head (1) is provided with a hole (5), that the socket (10) has a first end (11), and that the socket (10) is mounted to the head (1) by positioning of the first end (11) in the hole (5).

3. A device according to claim 2, **characterised** in that the socket (10) is provided with a collar (13), that the collar (13) is provided between the first end (11) and the second end (12) of the socket (10), and that the collar (13) is designed to contact the underside (4) of the head (1).

4. A device according to any one of the preceding claims, **characterised** in that the head (1) is provided with grooves (6, 7), that the first end (11) of the socket (10) is provided with tongues (14, 15), and that the tongues (14, 15) project into the grooves (6, 7).

5. A device according to any one of the preceding claims, **characterised** in that the socket (10) is provided with a recess (18), that the recess (18) extends from the second end (12), and that the recess (18) is designed to receive the sensor element.

6. A device according to any one of the preceding claims, **characterised** in that the legs (2, 3) have extreme ends (8, 9), that a distance (a) between the extreme ends (8, 9) of the legs (2, 3) is shorter than a distance (A) between a part of the legs (2, 3) extending between the head (1) and the extreme ends (8, 9).

7. A device according to any one of the preceding claims, **characterised** in that the legs (2, 3) have extreme ends (34, 35), that flanges (32) are formed at the extreme ends (34, 35), and that the flanges (34, 35) extend outwardly relative to a distance (A) between a part of the legs (2, 3) extending between the head (1) and the extreme ends (8, 9).

8. A device according to any one of the preceding claims, **characterised** in that the socket (10) is produced from metal, preferably zinc.

9. A device according to any one of the preceding claims, **characterised** in that the head (1, 30) and the legs (2, 3) are produced from a heat-resisting plastic.

10. A use of a device according to any one of the preceding claims for fastening a sensor element of a temperature measuring instrument to a pipe (20).
